# EUROPÄISCHE PATENTSCHRIFT

(11) **EP 0 376 246 B1**
(45) Veröffentlichungstag und Bekanntmachung des Hinweises auf die Patenterteilung: **09.03.1994**
(21) Anmeldenummer: 89123939.4
(22) Anmeldetag: 27.12.1989
(51) Int. Cl.: B23Q 7/14, B23Q 7/03, B65G 19/02, B23Q 7/00, B65G 25/08

(54) **Palettenwechsler**
Pallet changing device
Changeur de palette

(30) Priorität: 29.12.1988 DE 3844248
(43) Veröffentlichungstag der Anmeldung: 04.07.1990
(73) Patentinhaber: DÖRRIES SCHARMANN GmbH, D-41236 Mönchengladbach (DE)
(72) Erfinder: Kessler, Kurt, D-8000 München 80 (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)

(56) Entgegenhaltungen:
- DE-A- 3 431 349
- DE-A- 3 734 908
- PATENT ABSTRACTS OF JAPAN vol. 8, no. 270 (M-344)(1707) 11 Dezember 1984,& JP-A-59 142042 (MORI TEKKOSHO K.K.) 15 August 1984,

## Beschreibung

Die Erfindung betrifft eine Vorrichtung zum Wechseln von Paletten an Werkzeugmaschinen, bestehend aus zwei nebeneinander angeordneten Wechselstationen mit zugeordneten, mit jeweils einer Palette kuppelbaren Ketten-Linearantrieben zum wechselweisen Palettentransport zwischen dem Maschinenarbeitsbereich und einer der Wechselstationen.

Bekannte, in der Praxis verwendete Palettenwechsler, die jeweils vor der Bearbeitungsstation einer Werkzeugmaschine angeordnet sind, besitzen zwei Wechselstationen, von denen jede einen eigenen Kettenantrieb besitzt. Der Kettenantrieb ist mit der jeweiligen Palette kuppelbar, und diese Kupplung zwischen Palette und Kettentrieb bleibt stets bestehen, solange sich eine Palette im Bereich einer Wechselstation befindet. Entkuppelt wird die Palette von dem Kettentrieb erst nach erfolgter Übergabe der Palette in die Bearbeitungsstation der Werkzeugmaschine bzw. in eine sonstige Transportvorrichtung. Die eigenen Kettenantriebe der Wechselstationen sind aufwendig und haben einen Hörenden Platzbedorf.

In der jeweiligen Wechselstation des bekannten Palettenwechslers befinden sich die Paletten in Warteposition und werden in dieser Warteposition auch bestückt. Nachteilig ist dabei, daß eine gute Zugänglichkeit für diese Bestückung nur von zwei Seiten her gegeben ist, eine Bestückung von der dritten Seite her Schwierigkeiten bereiten kann und die vierte Seite, die der Rückseite entspricht, überhaupt nicht zugänglich ist.

Die verwendeten Kettentriebe zur Linearverschiebung der Paletten haben sich allerdings in der Praxis außerordentlich bewährt, da sie einerseits zuverlässig sind und andererseits aufgrund ihrer Ovalführung die Antriebsbeschleunigung und Abbremsung sehr günstig und ruckfrei gestaltet werden können.

Aufgabe der Erfindung ist es daher, einen Palettenwechsler der eingangs angeführten Art unter Beibehaltung der Antriebsvorteile bekannter Palettenwechsler in der Weise auszubilden, daß der Antriebsaufwand und der Raumbedarf für den Antrieb verringert wird. Bevorzugt soll ferner eine problemfreie, von allen Seiten her gleich gute Palettenbestückung möglich sein.

Gelöst wird diese Aufgabe nach der Erfindung im wesentlichen dadurch, daß beiden Wechselstationen ein einziger, im Viereck geführter Kettentrieb zugeordnet ist, daß der Kettentrieb über Kuppelglieder mit einer Palette in einer der Wechselstationen oder im Maschinenarbeitsbereich kuppel- und nach dem entsprechenden Lineartransport in den jeweiligen Sollpositionen entkuppelbar ist.

Durch die Verwendung eines einzigen Kettenantriebs für beide Wechselstationen wird antriebsmäßig eine wesentliche Vereinfachung erzielt und der Raumbedarf verringert, ohne daß damit irgendwelche funktionellen Nachteile in Kauf genommen werden müßten.

Die gemäß einer bevorzugten Ausgestaltung der Erfindung erreichte Entkuppelbarkeit zwischen Antrieb und Palette bei sich in der Wechselstation befindender Palette gestattet es, ein gezieltes manuelles oder automatisches Verschwenken der Palette um eine in der Wechselstation realisierte Drehachse vorzunehmen, wodurch eine praktisch für alle Seiten gleich gute Zugänglichkeit der Palette für Bestückungsarbeiten erreicht wird.

Besondere vorteilhafte Ausgestaltungen dieser Grundkonstruktion sind in den Ansprüchen 2 bis 11 angegeben.

Eine Weiterbildung der Erfindung, die im Hinblick auf die erzielbaren Vorteile von ganz besonderer Bedeutung ist, besteht darin, daß der Kettenantrieb schlupffrei mit einer Steuertrommel gekuppelt ist, die an ihrem Umfang mit in verschiedenen Trommel-Querebenen angeordneten und mit Schaltern, Pneumatik- und/oder Hydraulikventilen zusammenwirkenden Steuernocken versehen ist, wobei jede Trommelumfangsbahn ein Abbild der Kettenlänge darstellt.

Mittels dieser Steuertrommel, die in einem völlig verschmutzungsfreien Bereich unterhalb der Wechselstationen angebracht werden kann, ist es möglich, ganz gezielt und genau Signale zu erzeugen und/oder Schaltvorgänge in Abhängigkeit von der jeweiligen Kettenposition zu realisieren, da der gesamte Kettenumfang exakt durch die Trommel abgebildet wird und somit die an der Steuertrommel vorgesehenen Steuernocken nur einmal exakt eingestellt werden müssen, um die entsprechenden Signalgabepositionen zu definieren. Eine Justierung der Steuernocken auf der Trommel ist dabei mit hoher Genauigkeit möglich, und da diese Justiermöglichkeit gegeben ist, können die entsprechenden, durch die Steuernocken zu betätigenden Schalter und Ventile ortsfest angebracht werden. Es ist auch ohne weiteres möglich, der Steuertrommel einen Vielfachschalter zuzuordnen, so daß mit einem einzigen Kabel gearbeitet werden kann und sich dadurch auch eine Vereinfachung der Verdrahtung und somit eine weitere Kostenersparnis ergibt.

Über diese Steuertrommel können nicht nur die unmittelbar mit den Palettenwechselvorgängen im Zusammenhang stehenden Steuerungen realisiert werden, sondern es ist ohne weiteres auch möglich, beispielsweise eine Ankoppelhydraulik oder eine Einrichtung zur Teilereinigung zu steuern, und insbesondere kann über diese Trommel auch sehr exakt der in jeder Wechselstation vorhandene Indexbolzen gesteuert werden, und es können Ventile mechanisch betätigt werden, so daß die sonst notwendige Verwendung elektrischer Funktionen umgangen wird.

Es empfiehlt sich somit, die Steuertrommel so auszulegen, daß zusätzliche Hilfsfunktionen realisierbar sind, wobei diese Steuermöglichkeiten auch erst später genutzt werden können.

Ein Ausführungsbeispiel der Erfindung wird nachfolgend unter Bezugnahme auf die Zeichnung erläutert; in der Zeichnung zeigt:
- Fig. 1: eine schematische Draufsicht eines Palettenwechslers nach der Erfindung, und
- Fig. 2: eine ebenfalls schematische Teil-Vertikalschnittdarstellung des Palettenwechslers nach Fig. 1.

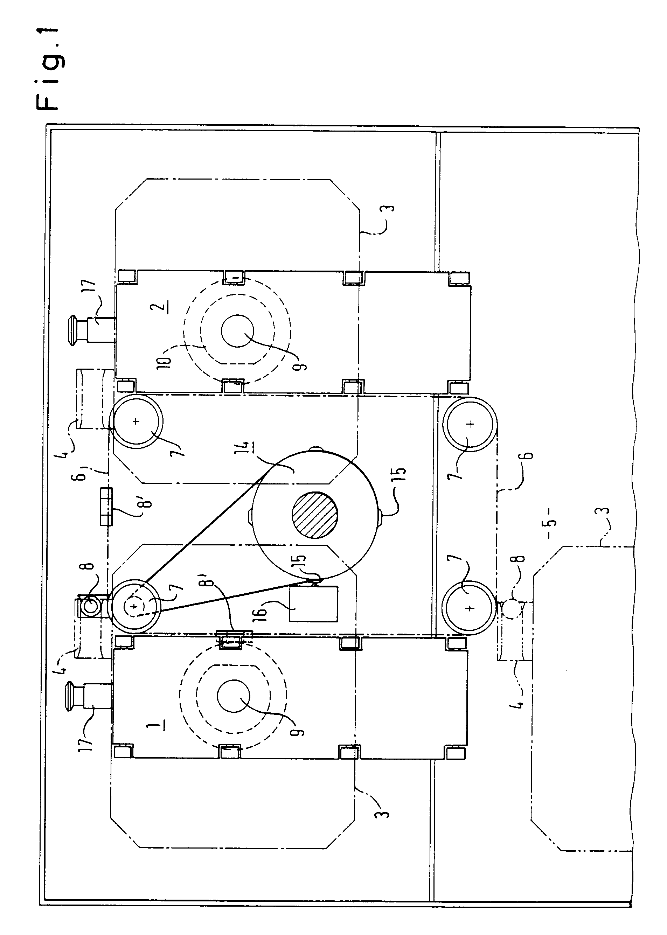

In der Draufsicht nach Fig. 1 sind die beiden Wechselstationen 1 und 2 des Palettenwechslers zu erkennen und die Umrisse der jeweils aufzunehmenden Palette 3 angedeutet.

Die Andockblöcke für die beiden Stationen 1 und 2 sind mit dem Bezugszeichen 17 gekennzeichnet.

Jede Palette ist mit einem Kuppelschienenelement 4 versehen, in das zum Zwecke des Palettentransports ein Nocken 8 eingreifen kann, welcher mit einem Kettentrieb 6 fest verbunden ist.

Dieser Kettentrieb 6 ist in einer Rechteckbahn geführt, wobei die Umlenkung in den Eckbereichen über Rollen 7 erfolgt.

Der gesamte Kettentrieb ist bezogen auf den Palettenwechsler mittig angeordnet und so ausgelegt, daß er sowohl zum Lineartransport von Paletten in die Station 1 bzw. aus der Station 1 als auch in die Station 2 und aus der Station 2 geeignet ist.

Vorzugsweise verlaufen die dem Transportweg entsprechenden Kettentriebs-Längsabschnitte in dem zwischen den beiden Wechselstationen 1, 2 gelegenen Bereich.

In jeder der beiden Wechselstation 1, 2 ist mittig eine von einem Indexbolzen 9 gebildete Zentrierstation vorgesehen, die es gestattet, die jeweilige Palette im vom Kettentrieb 6 entkuppelten Zustand unter Beibehaltung von deren Zentrierung zu verschwenken, so daß die Palette von allen Seiten für Aufspannvorgänge gut zugänglich ist. Die Verschwenkbewegung wird über entsprechend vorgesehene Kugel- oder Rollenlager erleichtert.

Wird eine Palette 3 wie in der in Station 1 angedeuteten Weise von Palettenwechsler in den Maschinenbereich 5 überführt, dann ist steuerungstechnisch dafür Sorge getragen, daß die Palette 3 sich in der geforderten Grundstellung befindet und von der Zentriereinrichtung 9 entkoppelt ist, worauf ein mit dem Kettentrieb 6 verbundener Nocken 8 in die Kuppelschiene 4 eingreifen und der Palettentransport beginnen kann. Aufgrund der Umlenkung über die Rolle 7 wird ein ruckfreies Anfahren sichergestellt und ein Hochfahren auf die Ketten-Transportgeschwindigkeit ähnlich einer Sinusfunktion erreicht. Analog erfolgt am Ende des Transportvorgangs wieder ein Abbremsen der Palette, ein Stillsetzen der Palette und ein Entkoppeln zwischen dem Transportnocken 8 und der Kuppelschiene 4.

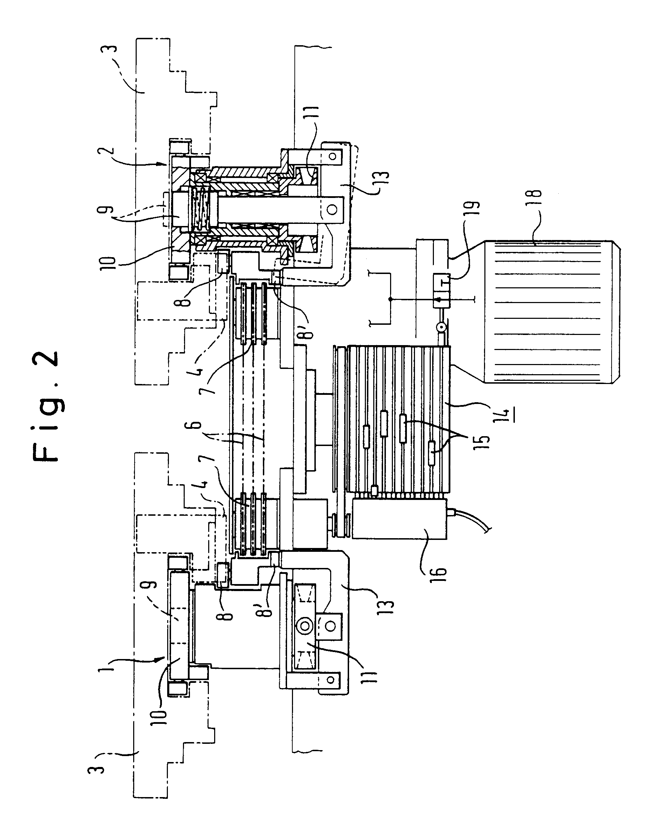

Die Schnittansicht nach Fig. 2 zeigt den Aufbau der jeweiligen Zentriereinrichtung mit dem Indexbolzen 9 und einer Drehtelleranordnung 10 in jeder der beiden Wechselstationen 1, 2. Der Indexbolzen 9 ist in der einen Richtung mittels einer Feder vorgespannt und kann in der anderen Richtung über einen Hebel 13 betätigt werden, der über einen wiederum fest mit dem Kettentrieb 6 verbundenen Steuernocken 8′ betätigt wird. Auf diese Weise ist es möglich, die jeweilige Palette 3 mit dem Indexbolzen 9 während der Phasen, in denen die jeweilige Palette vom Kettentrieb 6 entkoppelt ist, in der Weise zu kuppeln, daß die Position der Palette 3 zentriert bleibt, jedoch ein Drehverschwenken der Palette 3 möglich ist.

Um die Palette 3 in den verschiedenen Schwenkpositionen fixieren zu können, ist die Drehtelleranordnung 10 mit einer Drehblockiereinheit 11 in Form einer Scheibe fest verbunden, welche den einzelnen Positionen zugeordnete Ausnehmungen aufweist, in die formschlüssig und spielfrei entsprechende Arretierbolzen eingreifen können. Zweckmäßigerweise ist dabei eine speziell ausgeführte Ausnehmung der Palettengrundstellung zugeordnet, und der entsprechende Arretierbolzen ist vorzugsweise elektrisch abfragbar, da die Funktionen des Palettenwechslers nur dann ordnungsgemäß ablaufen können, wenn nach erfolgter Bestückung der Palette 3 unter entsprechender Palettenverschwenkung wieder die Grundstellung erreicht ist.

Angetrieben wird der Kettentrieb 6 über einen Motor 18, und dieser einzige Motor reicht aus, um sämtliche erforderlichen Bewegungen der Paletten und der Steuertrommel zwischen den Wechselstationen 1, 2 und dem Maschinenbereich 5 zu realisieren.

Eine Besonderheit des Palettenwechslers nach der Erfindung besteht in der Verwendung einer Steuertrommel 14, die sich in völligem Gleichlauf mit dem Kettentrieb 6 bewegt und auf deren Umfang die Kettenlänge analog dargestellt ist.

In verschiedenen Querebenen dieser Trommel 16 sind Führungsbahnen für Steuernocken 15 ausgebildet, und diese Steuernocken 15 sind in den Führungsbahnen exakt justierbar. Der Steuertrommel 14 zugeordnet ist ein Mehrfachschalter 16, so daß aufgrund des Zusammenwirkens der Steuernocken 15 und des Mehrfachschalters 16 äußerst exakt Steuersignale in Abhängigkeit von der jeweiligen Kettenposition erzeugt werden können, und zwar mit hoher Zuverlässigkeit, da diese Signalerzeugung in einem absolut geschützten Bereich erfolgt.

Anstelle eines Mehrfachschalters 16 können natürlich auch verschiedene Einzelschalter verwendet werden, und es ist insbesondere auch möglich, Hilfsfunktionen zu steuern, wie dies bei 19 angedeutet ist.

Bei asymmetrischer Auslegung der Kettentriebe ist es auch möglich, identische Paletten zu verwenden.

### Bezugszeichenliste:

- 1.: Wechselstation
- 2.: Wechselstation
- 3.: Palette
- 4.: Kuppelschiene
- 5.: Maschinenbereich
- 6.: Kettentrieb
- 7.: Umlenkrollen
- 8, 8′.: Nocken
- 9.: Zentriereinrichtung bzw. Indexbolzen
- 10.: Drehteller
- 11.: Drehblockierung
- 12.: Feder
- 13.: Hebel
- 14.: Steuertrommel
- 15.: Steuernocken
- 16.: Schalter
- 17.: Andockblock
- 18.: Motor
- 19.: Hilfsfunktion

## Patentansprüche

1. Vorrichtung zum Wechseln von Paletten an Werkzeugmaschinen, bestehend aus zwei nebeneinander angeordneten Wechselstationen (1, 2) mit zugeordneten, mit jeweils einer Palette (3) kuppelbaren Ketten-Linearantrieben zum wechselweisen Palettentransport zwischen dem Maschinenarbeitsbereich (5) und einer der Wechselstationen (1, 2),
dadurch **gekennzeichnet,**
daß beiden Wechselstationen (1, 2) ein einziger, im Viereck geführter Kettentrieb (6) zugeordnet ist, daß der Kettentrieb (6) über Kuppelglieder (4, 8) mit einer Palette (3) in einer der Wechselstationen (1, 2) oder im Maschinenarbeitsbereich (5) kuppel- und nach dem entsprechenden Lineartransport in den jeweiligen Sollpositionen entkuppelbar ist.

2. Vorrichtung nach Anspruch 1,
dadurch **gekennzeichnet,**
daß in jeder Wechselstation (1, 2) eine Einrichtung (9) zur Zentrierung der jeweils vom Kettentrieb (6) entkuppelten und um diese Zentriereinrichtung (9) drehbaren Palette (3) vorgesehen ist.

3. Vorrichtung nach Anspruch 1 oder 2,
dadurch **gekennzeichnet,**
daß die beiden der Transportstrecke entsprechenden, vorzugsweise zueinander parallelen Kettentriebabschnitte in dem Bereich zwischen den Zentriereinrichtungen (9) der beiden Wechselstationen gelegen sind.

4. Vorrichtung nach einem der vorhergehenden Ansprüche,
dadurch **gekennzeichnet,**
daß die jeweiligen Kuppel- und Entkuppelpositionen zwischen Kettentrieb (6) und Palette (3) einander gegenüberliegend im Bereich der Kettentrieb-Umlenkrollen (7) und in der zur Palettentransportrichtung senkrechten Bewegungsbahn des Kettentriebs (6) angeordnet sind.

5. Vorrichtung nach einem der vorhergehenden Ansprüche,
dadurch **gekennzeichnet,**
daß jede Wechselstation (1, 2) einen in insbesondere vier um 90° gegeneinander versetzten Schwenkpositionen blockierbaren Drehteller (10) zur Palettenaufnahme besitzt.

6. Vorrichtung nach Anspruch 5,
dadurch **gekennzeichnet,**
daß eine der Schwenkpositionen die der Transportposition entsprechende Grundposition bildet und daß diese Grundposition zur Gewinnung einer Steuergröße für den Funktionsablauf prüf- und/oder abtastbar ist.

7. Vorrichtung nach einem der vorhergehenden Ansprüche,
dadurch **gekennzeichnet,**
daß die Zentriereinrichtung aus einem in Abhängigkeit von der Kettentriebposition vertikal verfahrbaren Indexbolzen (9) besteht, der bezüglich der Drehtelleranordnung (10) zentrisch gelegen ist.

8. Vorrichtung nach Anspruch 7,
dadurch **gekennzeichnet,**
daß der Indexbolzen (9) in einer Richtung durch eine Feder (12) vorgespannt und in der anderen Richtung durch einen Hebel (13) betätigbar ist, der durch einen mit dem Kettentrieb (6) verbundenen Nocken (8) gesteuert ist.

9. Vorrichtung nach Anspruch 7,
dadurch **gekennzeichnet,**
daß der Indexbolzen (9) durch eine in Abhängigkeit von der Kettentriebposition gesteuerte Zylinder-Kolben-Anordnung betätigbar ist.

10. Vorrichtung nach einem der vorhergehenden Ansprüche,
dadurch **gekennzeichnet,**
daß der Kettenantrieb schlupffrei mit einer Steuertrommel (14) gekuppelt ist, die an ihrem Umfang mit in verschiedenen Trommel-Querebenen angeordneten und mit Schaltern (16) zusammenwirkenden Steuernocken (15) versehen ist, wobei jede Trommelumfangsbahn ein Abbild der Kettenlänge darstellt.

11. Vorrichtung nach Anspruch 10,
dadurch **gekennzeichnet,**
daß die Steuernocken (15) über den Umfang der Steuertrommel (14) verstellbar und exakt justierbar sind.

## Claims

1. Apparatus for changing pallets at machine tools comprising two changing stations (1, 2) arranged alongside one another with associated linear chain drives which can each be coupled to a pallet (3) for the reciprocal pallet transport between the working machine region (5) and one of the changing stations (1, 2) characterised in that a single chain drive (6) directed in a rectangle is associated with both changing stations (1, 2); in that the chain drive (6) can be coupled via coupling members (4, 8) with a pallet (3) in one of the changing stations (1, 2) or in the working region (5) of the machine and can be decoupled after corresponding linear transport into the respective desired position.

2. Apparatus in accordance with claim 1, characterised in that a means (9) is provided in each of the changing stations (1, 2) for centering the rotatable pallet (3) which has been respectively decoupled from the chain drive (6) and is rotatable about this centering means (9).

3. Apparatus in accordance with claim 1 or claim 2, characterised in that the two chain drive sections corresponding to the transport path, which are preferably parallel to one another, are disposed in the region between the centering means (9) of the two changing stations.

4. Apparatus in accordance with one of the preceding claims, characterised in that the respective coupling and decoupling positions between chain drive (6) and pallet (3) are disposed lying opposite to one another in the region of the chain drive deflection rolls (7) and in the path of movement of the chain drive (6) perpendicular to the pallet transport direction.

5. Apparatus in accordance with one of the preceding claims, characterised in that each changing station (1, 2) has a rotatable plate (10) for the pallet reception which can be blocked, in particular, in 4 pivotal positions mutually displaced by 90°.

6. Apparatus in accordance with claim 5, characterised in that one of the pivotal positions forms the basic position corresponding to the transport position, and in that this basic position can be checked and/or sensed to obtain a control parameter for the functional sequence.

7. Apparatus in accordance with one of the preceding claims, characterised in that the centering means consists of an indexing bolt which is vertically movable in dependence on the chain drive position and which is centrally disposed relative to the rotary plate arrangement (10).

8. Apparatus in accordance with claim 7, characterised in that the indexing bolt (9) is biased in one direction via a spring (12) and is actuatable in the other direction by a lever (13) which is controlled by a cam (8) connected to the chain drive (6).

9. Apparatus in accordance with claim 7, characterised in that the index bolt (9) is actuatable by a piston-in-cylinder arrangement controlled in dependence on the chain drive position.

10. Apparatus in accordance with one of the preceding claims, characterised in that the chain drive is coupled in slip-free manner with a control drum (14) which is provided at is periphery with control cams (15) which are arranged in different transverse drum planes and cooperate with switches (16), with each drum peripheral track representing an image of the chain length.

11. Apparatus in accordance with claim 10, characterised in that the control cams (15) are displaceable and precisely adjustable around the periphery of the control drum (14).

## Revendications

1. Dispositif servant à l'échange de palettes sur des machines-outils, composé de deux stations d'échange (1,2) placées l'une à côté de l'autre, comportant des entraînements linéaires à chaîne associée, respectivement couplables à une palette (3), qui servent au transport alternatif de palettes entre la zone de travail de la machine (5) et l'une des stations d'échange (1,2), caractérisé en ce que, aux deux stations d'échange (1,2) est associé un unique entraînement à chaîne (6) parcourant un quadrilatère, en ce que l'entraînement à chaîne (6) est, par l'intermédiaire d'éléments de couplage (4,8), couplable avec une palette (3) dans l'une des deux stations d'échange (1,2) ou dans la zone de travail (5) de la machine et découplable après le transport linéaire correspondant sur les emplacements respectivement programmés.

2. Dispositif selon la revendication 1, caractérisé en ce que, dans chaque station d'échange (1,2), il est prévu un mécanisme (9) pour centrer la palette (3) respectivement découplée de l'entraînement à chaîne (6) et capable de tourner autour de ce mécanisme de centrage (9).

3. Dispositif selon la revendication 1 ou 2, caractérisé en ce que les deux tronçons de l'entraînement à chaîne correspondant au trajet de transport, parallèles entre eux de préférence, sont situés dans la zone entre les mécanismes de centrage (9) des deux stations d'échange.

4. Dispositif selon l'une des revendications précédentes, caractérisé en ce que les positions respectives de couplage et de découplage entre l'entraînement à chaine (6) et la palette (3) sont situées vis-à-vis l'une de l'autre dans la zone des poulies de renvoi (7) de l'entraînement à chaine et dans la portion de parcours de l'entraînement à chaîne (6) perpendicualire à la direction de transport des palettes.

5. Dispositif selon l'une des revendications précédentes, caractérisé en ce que chaque station d'échange (1,2) possède un plateau tournant (10) blocable en particulier sur quatre positions de pivotement décalées de 90° l'une par rapport à l'autre.

6. Dispositif selon la revendication 5, caractérisé en ce que l'une des positions de pivotement constitue la position de base correspondant à la position de transport et en ce que cette position de base est testable et explorable, afin d'obtenir une valeur de commande pour le processus fonctionnel.

7. Dispositif selon l'une des revendications précédentes, caractérisé en ce que le mécanisme de centrage se compose d'un goujon de repérage (9) déplaçable verticalement en fonction de la position de l'entraînement à chaîne et situé au centre de l'agencement du plateau tournant (10).

8. Dispositif selon la revendication 7, caractérisé en ce que le goujon de repérage (9) est précontraint par un ressort (12) dans une direction et actionnable dans l'autre direction au moyen d'un levier (13) commandé par un mentonnet (8) relié à l'entraînement à chaîne (6).

9. Dispositif selon la revendication 7, caractérisé en ce que le goujon de repérage (9) est actionnable au moyen d'un dispositif cylindre-piston commandé en fonction de la position de l'entraînement à chaîne.

10. Dispositif selon l'une des revendications précédentes, caractérisé en ce que l'entraînement à chaîne est couplé, sans glissement, à un tambour de commande (14), qui est pourvu sur sa périphérie de mentonnets de commande (15) placés dans des plans transversaux différents du tambour et coopérant avec des commutateurs (16), chaque voie périphérique du tambour représentant une image de la longueur de la chaîne.

11. Dispositif selon la revendication 10, caractérisé en ce que les mentonnets de commande (15) sont réglables et ajustables avec précision sur le périmètre du tambour de commande (14).
